Europäisches Patentamt

European Patent Office

Office européen des brevets

(19)

(11) Veröffentlichungsnummer: **0 501 519 A1**

## (12) EUROPÄISCHE PATENTANMELDUNG

(21) Anmeldenummer: **92103521.8**

(22) Anmeldetag: **29.02.92**

(51) Int. Cl.5: **F16B 25/00**

(30) Priorität: **01.03.91 DE 9102626 U**

(43) Veröffentlichungstag der Anmeldung:
**02.09.92 Patentblatt 92/36**

(84) Benannte Vertragsstaaten:
**AT CH DE FR GB IT LI NL SE**

(71) Anmelder: **RICHARD BERGNER GMBH & CO**
**Bahnhofstrasse 8-16**
**W-8540 Schwabach(DE)**

(72) Erfinder: **Ehrenstein, Gottfried W., Prof.**
**Dr.-Ing.**

Friedrich-Bauer-Strasse 40
W-8520 Erlangen(DE)
Erfinder: **Trinter, Frank, Dipl.-Ing.**
**Am Rosengarten 4**
**W-3504 Kaufungen(DE)**
Erfinder: **Dratschmidt, Frank, Dipl.-Ing.**
**Schnepfenreuther Weg 23**
**W-8500 Nürnberg 90(DE)**

(74) Vertreter: **Tergau, Enno, Dipl.-Ing. et al**
**Tergau & Pohl Patentanwälte Mögeldorfer**
**Hauptstrasse 51**
**W-8500 Nürnberg 30(DE)**

(54) **Gewindeselbstformende Schraube.**

(57) Eine gewindeselbstformende Schraube mit asymmetrischen Gewindeprofil weist einen Lastflankenwinkel (6) an der Flankenspitze (5) bis zu 60° und einen Steilflankenwinkel (8) an der Flankenspitze (5) bis zu 20° auf. Dabei vergrößert sich der Lastflankenwinkel (6) stetig von der Flankenspitze (5) zum Gewindegrund am Kerndurchmesser auf dort 90°.

FIG.1

EP 0 501 519 A1

Die Erfindung betrifft eine gewindeselbstformende Schraube zum Einschrauben auch in verstärkte Kunststoffe mit asymmetrischem Gewindeprofil. Soweit hier von einer Verstärkung der Kunststoffe die Rede ist, handelt es sich beispielsweise um eine Glasfaser-, Wirrfaser-, Gewebe- oder Glasmattenverstärkung. Anwendung finden diese hauptsächlich in Form von verstärkten Fließpreß-, Preß- und Spritzgußmassen. Wichtige Vertreter dieser Werkstoffgruppe ist Sheet moulding compound (SMC). Darauf entfallen in der Anwendung mehr als die Hälfte aller glasfaserverstärkten Duroplaste. Aus unverstärkten Kunststoffen hingegen bestehen vorwiegend Dübel, bei denen gewissermaßen der Umgebungsbaustoff eine Armierung bildet, die der Dübel nicht zu sprengen vermag.

Für SMC- und ähnlich aufgebaute Bauteile ist die sich parallel zur Wand einstellende Schichtung der Verstärkungsfasern, Matrix (duro- oder thermoplastisch) und eventuell zusätzlicher Beimengungen charakteristisch. Dieser Aufbau ist für die Direktverschraubung mit gewindeselbstformenden Schrauben insofern vorteilhaft, als eine örtliche Schädigung der Matrix nicht zum Versagen der Krafteinleitungsstelle durch Rißbildung führt. Dies ermöglicht den Einsatz gewindeselbstformender Schrauben, obwohl im Gegensatz zu vielen Thermoplasten eine weitgehend schädigungsfreie plastische Verformung im Gewindebereich nicht erreicht werden kann.

Die Verankerungskräfte gewindeselbstformender Schrauben werden durch die Gewindeflanken formschlüssig in den Werkstoff eingeleitet. Unter Zugrundelegung gleichförmiger Spannungsverteilungen können die Verschraubungsnennspannungen (Gewindemantelschub und Gewindeflankenpressung) als Quotienten von Axialzugkraft und im Eingriff befindlicher Gewindeflankenfläche definiert werden. Analysen der Verankerung haben ergeben, daß die durch die Verankerungskräfte hervorgerufene Werkstoffanstrengung im Gewindeflankenbereich der Gewindeflankenpressung und in der Gewindemantelfläche dem Gewindemantelschub entspricht.

Die Verankerungsfestigkeit gewindeselbstformender Schrauben in SMC- oder aus ähnlichen Werkstoffen aufgebauten Verschraubungsdomen weist eine gegenüber duktilen Thermoplast-Verschraubungen ausgeprägte Abhängigkeit vom Durchmesser des Verschraubungskernlochs auf. Mit Verkleinerung des Kernlochdurchmessers steigt die Verankerungsfestigkeit näherungsweise linear an und erreicht bei demjenigen Kernlochuntermaß ein Maximum, bei dem die Flankenüberdeckung das geometrisch mögliche Höchstmaß annimmt. Dieses ist dann erreicht, wenn das von der Gewindespitze verdrängte Werkstoffvolumen den Gewindegrund ausfüllt. Optimaler Kernlochdurchmesser zur Verankerung gewindeformender Schrauben ist dieser Formfüllungsdurchmesser, der, bei den in einem Umformungsvorgang gefertigten Gewinden, dem Durchmesser des Schraubenschaftes entspricht.

Übliche Schraubentypen der eingangs genannten Art sind beispielsweise Gegenstand von DE 32 35 352 A1. Nachteilig ist bei dem Profil dieser Schraube allerdings der unstetige Übergang des Flankenprofils in den Kernbereich des Gewindes. Bei der aus DE 32 07 975 A1 bekannten gewindeselbstformenden Schraube vergrößern sich indessen die Flankenwinkel von der Flankenspitze bis zum Gewindegrund stetig, was eine schädigungsfreie Umformung des Kunststoffes begünstigt. Allerdings ist das Profil dieser ebenfalls für das Einschrauben in Kunststoff bestimmten Schraube nicht asymmetrisch.

Der Erfindung liegt die Aufgabe zugrunde, eine gewindeselbstformende Schraube der eingangs genannten Art so auszubilden, daß die Festigkeitseigenschaften der mit ihr hergestellten Verschraubungen verbessert werden. Diese Aufgabe wird durch das Kennzeichen des Anspruches 1 gelöst. Die dynamische Verankerungsfestigkeit einer derartigen Schraube erhöht sich gegenüber bekannten, für denselben Verwendungszweck bestimmten Schrauben beträchtlich. Ihre Gewindekontur nutzt durch radiale Pressungen die Umfangsverstärkungswirkung im SMC-Werkstoff und stabilisiert das eingeformte Gewinde. Neben hoher dynamischer Festigkeit liegt eine nur geringe Relaxationsneigung vor. Eine mitden Merkmalen des Anspruchskennzeichens ausgestaltete Gewindekontur kann an jeder Stelle der Gewindemantelfläche das gleiche für die Schubfestigkeit des Werstoffs günstige Schub/Pressungs-Verhältnis herstellen.

Zum Einschrauben in unverstärkte Kunststoffe, beispielsweise in Dübel, beträgt die Summe von Last- und Steilflankenwinkel an der Flankenspitze zweckmäßig maximal 60°. In diesem Fall sollte allerdings der Steilflankenwinkel gegen 0° tendieren, so daß eine maximale Gewindemantelpressung gewährleistetist. Für SMC-Werkstoffe hingegen beträgt zweckmäßig der Lastflankenwinkel der Flankenspitze maximal 25°, während dort der Steilflankenwinkel auf maximal 5° limitiert sein sollte.

Weitere zur Lösung der Problemstellung vorteilhafte Ausgestaltungsmerkmale sind Gegenstand weiterer Unteransprüche. Durch die erfindungsgemäße Profilgebung wird unter Last ein über die Gewindelänge gleichbleibendes Verhältnis der Kunststoffbeanspruchung durch Schub in Lastrichtung und durch Gewindeflankenpressung in senkrecht dazu wirksamer Richtung erzeugt. Gewindetiefe und Gewindeteilung sind dabei so aufeinander abgestimmt, daß die Festigkeit von SMC-Werkstoffen gegenüber verschraubungstypischen Beanspruchungen optimal ausgenutzt wird.

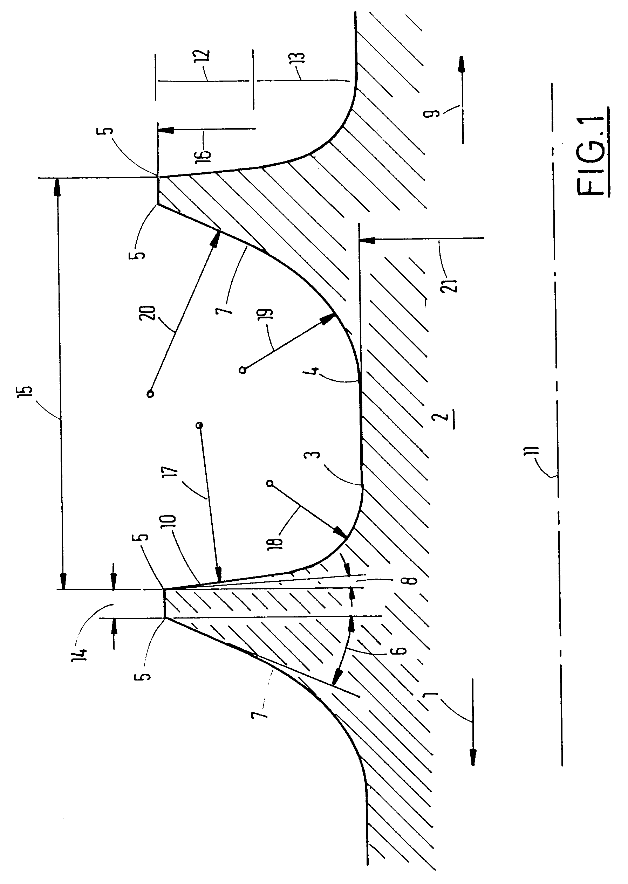

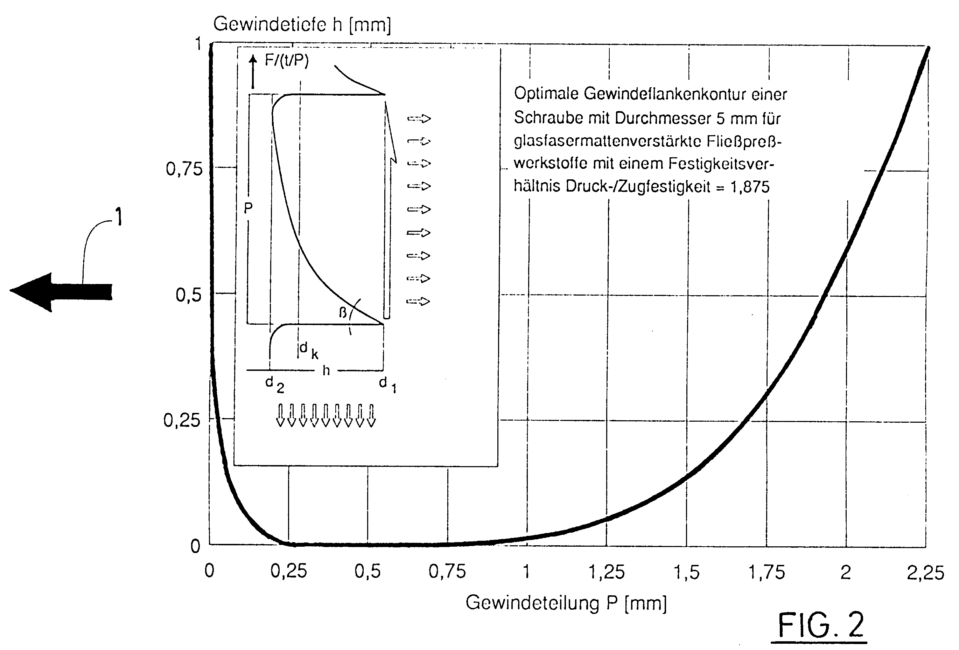

Die Erfindung wird anhand von in den Figuren dargestellten Beispielen näher erläutert. Dabei zeigen Fig. 1 und Fig. 2 erfindungsgemäß ausgestaltete Gewindeprofile, davon Fig. 2 ein solches in abmessungsgenauer Darstellung.

Die Schraube besteht im wesentlichen aus dem nicht dargestellten, in Lastrichtung 1 befindlichen Schraubenkopf und aus dem Kern 2, der von dem ein- oder gegebenenfalls auch mögliche mehrgängigen Gewindeprofil 3 umgeben ist. Das Gewindeprofil 3 steht derart von dem durch die Oberfläche des Schraubenkerns 2 gebildeten Gewindegrund 4 ab, daß sich die Steigungen der Flankenprofile von den Flankenspitzen 5 bis zum Gewindegrund 4 stetig ändern. Der Lastflankenwinkel 6 beträgt an der Flankenspitze 5 zwischen 20° und 60°. Der Steilflankenwinkel 8 hingegen beträgt an der Flankenspitze 5 nur bis zu 20°.

Der Lastflankenwinkel 6 vergrößert sich stetig ausgehend von der Flankenspitze 5 bis zum Gewindegrund am Kerndurchmesser.

Die Summe der beiden Flankenwinkel 6,8 beträgt an der Flankenspitze maximal 60°. Bei der Verwendung der Schraube für Dübel tendiert dabei zweckmäßig der Steilflankenwinkel 8 gegen 0°, um die radiale Pressung der Lastflanken zu vergrößern.

Für das Einschrauben in faserverstärkte Fließpreßwerkstoffe beträgt vorteilhaft der Lastflankenwinkel 6 an der Flankenspitze 5 maximal 25°, während der Steilflankenwinkel 10 an der Flankenspitze 5 zweckmäßig eine Maximalgröße von 5° aufweist.

Die Flankenspitzen 5 sind zweckmäßig mit einer solchen Spitzenbreite 14 abgeflacht, daß sie umfangsseitig Teile etwa eines Zylindermantels mit der Gewindeachse 11 als Zylinderachse sind. Das Abmessungsverhältnis von Gewindesteigung 15 zu Gewindeaußendurchmesser 16 trägt zwischen 0,2 und 0,6. Bei einem solchen Abmessungsverhältnis von 0,8 wäre bereits die Grenze der Selbsthemmung erreicht. Zweckmäßig ist dieses Abmessungsverhältnis mit etwa 0,4 bemessen.

Das Lastflankenprofil 7 weist zweckmäßig die Form zweier aneinandergesetzter Kreisbogensegmente auf, wobei das Kreisbogensegment im radial äußeren Bereich 12 durch einen das 0,6- bis 1,2-fache, insbesondere durch einen das 0,8-fache des Außendurchmessers 16 betragenden Radius 20 bestimmt ist, während der entsprechende Radius 19 im radial inneren Bereich 13 das 0,15- bis 0,3-fache, insbesondere das 0,2-fache des Gewindeaußendurchmessers 16 beträgt.

Das Steilflankenprofil 10 kann geradlinig ausgebildet sein. Dabei kann sich seine Geradlinigkeit über die gesamte Profilhöhe erstrecken. Zweckmäßig ist aber eine Ausrundung des Überganges des Steilflankenprofils 10 in den Kernbereich bzw. in den Gewindegrund 4 vorgesehen. Dabei ist zweckmäßig, das Steilflankenprofil 10 im radial inneren Bereich 13 durch einen das 0,05- bis 0,2-fache, insbesondere etwa durch einen das 0,1-fache des Außendurchmessers 16 betragenden Radius 18 zu bilden.

Als besonders vorteilhaft hat sich ein Steilflankenprofil 10 erwiesen, welches im radial äußeren Bereich 12 durch einen das 0,6- bis 1,2-fache, insbesondere das 0,8-fache des Außendurchmessers 16 betragenden Radius 17 aufweist und dessen Radius 18 im radial inneren Bereich 13 das 0,05- bis 0,2-fache, insbesondere das 0,1-fache des Außendurchmessers 16 betragenden Radius 18 enthält. Zweckmäßig weist der Gewindegrund 4 eine zylindrische Profilkontur auf.

Die Schraube besteht zweckmäßig aus Vergütungsstahl, einsatzvergütetem Stahl oder aus Chromnickelstahl. Die Schraube kann an ihrem Einschraubende auch eine Schneidkerbe in Form z.B. einer Schabenut nach DIN 78 enthalten.

Bezugszeichenliste

| | |
|---|---|
| 1 | Lastrichtung |
| 2 | Schraubenkern |
| 3 | Gewindeprofil |
| 4 | Gewindegrund |
| 5 | Flankenspitze |
| 6 | Lastflankenwinkel |
| 7 | Lastflankenprofil |
| 8 | Steilflankenwinkel |
| 9 | Einschraubrichtung |
| 10 | Steilflankenprofil |
| 11 | Gewindeachse |
| 12 | radial äußerer Bereich |
| 13 | radial innerer Bereich |
| 14 | Spitzenbreite |
| 15 | Gewindesteigung |
| 16 | Gewindeaußendurchmesser |
| 17 | Außenradius der Steilflanke |
| 18 | Innenradius der Steilflanke |
| 19 | Innenradius der Lastflanke |
| 20 | Außenradius der Lastflanke |
| 21 | Kerndurchmesser |

**Patentansprüche**

1.  Gewindeselbstformende Schraube mit asymmetrischem Gewindeprofil zum Einschrauben auch in verstärkte Kunststoffe, wobei der Lastflankenwinkel (6) des Gewindeprofils größer ist als der Steilflankenwinkel (8),
    dadurch gekennzeichnet, daß
    a) der Lastflankenwinkel (6) an der Flankenspitze (5) zwischen 20° und 60° beträgt,
    b) der Steilflankenwinkel (8) an der Flankenspitze (5) bis 20° beträgt und c) der Lastflankenwinkel (6) sich stetig von der Flankenspitze (5) zum Gewindegrund (4) auf dort 90° vergrößert.

2. Schraube nach Anspruch 1,
   dadurch gekennzeichnet
   daß die Summe von Lastflankenwinkel (6) und Steilflankenwinkel (8) an den Flankenspitzen (5) maximal 60° beträgt.

3. Schraube nach Anspruch 1,
   dadurch gekennzeichnet,
   daß der Lastflankenwinkel (6) an der Flankenspitze (5) maximal 30° und der Steilflankenwinkel (8) an der Flankenspitze (5) maximal 10° beträgt.

4. Schraube nach Anspruch 3,
   dadurch gekennzeichnet,
   daß die Summe von Lastflankenwinkel (6) und Steilflankenwinkel (8) an den Flankenspitzen (5) etwa 30° beträgt.

5. Schraube nach Anspruch 1,
   dadurch gekennzeichnet,
   daß der Lastflankenwinkel (6) an der Flankenspitze (5) maximal 25° und der Steilflankenwinkel (8) an der Flankenspitze (5) maximal 5° beträgt.

6. Schraube nach einem oder mehreren der vorhergehenden Ansprüche
   dadurch gekennzeichnet,
   daß die Flankenspitzen (5) mit einer Spitzenbreite (14) abgeflacht sind derart, daß sie umfangsseitig Teile etwa eines Zylindermantels mit der Gewindeachse (11) als Zylinderachse sind.

7. Schraube nach einem oder mehreren der vorhergehenden Ansprüche,
   dadurch gekennzeichnet,
   daß das Abmessungsverhältnis von Gewindesteigung (15) zu Gewindeaußendurchmesser (16) 0,2 bis 0,6 beträgt.

8. Schraube nach einem oder mehreren der vorhergehenden Ansprüche,
   dadurch gekennzeichnet,
   daß das Abmessungsverhältnis von Gewindesteigung (15) zu Gewindeaußendurchmesser (16) 0,2 bis 0,5 beträgt.

9. Schraube nach Anspruch 7 oder 8,
   dadurch gekennzeichnet,
   daß das Abmessungsverhältnis von Gewindesteigung (15) zu Gewindeaußendurchmesser (16) etwa 0,4 beträgt.

10. Schraube nach einem oder mehreren der vorhergehenden Ansprüche,
    dadurch gekennzeichnet,
    daß das Lastflankenprofil (7) die Form zweier aneinandergesetzter Kreisbogensegmente aufweist, wobei das Kreisbogensegment im radial äußeren Bereich (12) einen das 0,6- bis 1,2-fache, insbesondere das 0,8-fache des Außendurchmessers (16) betragenden Radius (20) und im radial inneren Bereich (13) einen das 0,15- bis 0,3-fache, insbesondere das 0,2-fache des Außendurchmessers (16) betragenden Radius (19) aufweist.

11. Schraube nach einem oder mehreren der vorhergehenden Ansprüche,
    dadurch gekennzeichnet,
    daß das Steilflankenprofil (10) geradlinig ausgebildet ist.

12. Schraube nach Anspruch 11 ,
    gekennzeichnet durch
    eine Geradlinigkeit des Steilflankenprofils (10) über seine gesamte Profilhöhe.

13. Schraube nach Anspruch 11,
    gekennzeichnet durch
    eine Ausrundung des Überganges des Steilflankenprofils (10) in den Kernbereich des Gewindes (Gewindegrund 4).

14. Schraube nach einem der Ansprüche 11 bis 13,
    dadurch gekennzeichnet,
    daß das Steilflankenprofil (10) im radial äußeren Bereich (12) geradlinig und im radial inneren Bereich (13) durch einen das 0,05- bis 0,2-fache, insbesondere durch einen das 0,1- bis 0,15-fache des Außendurchmessers (16) betragenden Radius (18) gebildet ist.

15. Schraube nach einem oder mehreren der vorhergehende Ansprüche,
    dadurch gekennzeichnet,
    daß das Steilflankenprofil (10) im radial äußeren Bereich (12) einen das 0,6- bis 1,2-fache, insbesondere das 0,8-fache des Außendurchmessers (16) betragenden Radius (17) und im radial inneren Bereich (13) einen das 0,03- bis 0,2-fache, insbesondere das 0,1- bis 0,15-fache des Außendurchmessers (16) betragenden Radius (18) aufweist.

16. Schraube nach einem oder mehreren der vorhergehenden Ansprüche,
    gekennzeichnet durch
    einen Kernbereich von zylindrischer Profilkontur.

**17.** Schraube nach einem oder mehreren der vorhergehenden Ansprüche,
gekennzeichnet durch
eine Schneidkerbe an ihrem Einschraubende.

FIG.1

EP 0 501 519 A1

Gewindetiefe h [mm]

1

0,75

0,5

0,25

0

1

F/(t/P)

P

β

d_k

h

d_2          d_1

Optimale Gewindeflankenkontur einer
Schraube mit Durchmesser 5 mm für
glasfasermattenverstärkte Fließpreßwerkstoffe mit einem Festigkeitsverhältnis Druck-/Zugfestigkeit = 1,875

0    0,25    0,5    0,75    1    1,25    1,5    1,75    2    2,25

Gewindeteilung P [mm]

FIG. 2

EP 0 501 519 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| D,A | DE-A-3 235 352 (EBERHARD JAEGER GMBH & CO KG)<br><br>* Zusammenfassung; Ansprüche 1-3; Abbildung 2 *<br>--- | 1-5,11, 12,16 | F16B25/00 |
| D,A | DE-A-3 207 975 (RICHARD BERGNER GMBH & CO KG)<br><br>* Zusammenfassung; Ansprüche 1-8; Abbildung 2 *<br>--- | 1-5,10, 13,14,16 | |
| A | US-A-2 827 820 (DE VELLIER)<br>* Abbildung 1 *<br>--- | 1-5 | |
| A | FR-A-876 474 (GOBIN-DAUDE)<br>* das ganze Dokument *<br>--- | 1-5 | |
| A | DE-A-3 114 138 (RICHARD BERGNER)<br>* Abbildung 2 *<br>--- | 1 | |
| A | KUNSTSTOFFE.<br>Bd. 74, Nr. 7, Juli 1984, MUNCHEN DE<br>Seite 413; 'Schraube mit Spezialgewinde zum Verbinden von Kunststoffbauteilen'<br><br>----- | 1 | RECHERCHIERTE SACHGEBIETE (Int. Cl.5 )<br><br>F16B |

Der vorliegende Recherchenbericht wurde für alle Patentansprüche erstellt

| Recherchenort | Abschlußdatum der Recherche | Prüfer |
|---|---|---|
| BERLIN | 07 MAI 1992 | SCHAEFFLER C.A.A. |